# EUROPÄISCHE PATENTSCHRIFT

(11) **EP 2 217 455 B1**
(45) Veröffentlichungstag und Bekanntmachung des Hinweises auf die Patenterteilung: **04.04.2012**
(21) Anmeldenummer: 08803152.1
(22) Anmeldetag: 22.08.2008
(51) Int. Cl.: B60C 11/03, B60C 11/12, B60C 11/13

(54) **FAHRZEUGLUFTREIFEN**
PNEUMATIC VEHICLE TIRE
PNEUMATIQUE DE VÉHICULE

(30) Priorität: 26.10.2007 DE 102007051645
(43) Veröffentlichungstag der Anmeldung: 18.08.2010
(73) Patentinhaber: Continental Reifen Deutschland GmbH, 30165 Hannover (DE)
(72) Erfinder: DIENSTHUBER, Franz, 30559 Hannover (DE); WIESE, Klaus, 30559 Hannover (DE); WILDENHAIN, Jan, 38154 Rieseberg (DE)
(74) Vertreter: Finger, Karsten
(86) Internationale Anmeldenummer: PCT/EP2008/060987
(87) Internationale Veröffentlichungsnummer: WO 2009/053133

(56) Entgegenhaltungen:
- EP-A- 0 788 898
- WO-A-2004/056588
- US-A1- 2007 017 618

## Beschreibung

Die Erfindung betrifft einen Fahrzeugluftreifen, insbesondere für den Einsatz unter winterlichen Fahrbedingungen, mit einem Laufstreifen mit einer Profilierung mit auf maximale Profiltiefe ausgeführte Umfangsnuten, Schrägnuten und dergleichen sowie mit Quernuten, welche Profilblöcke begrenzen, welche jeweils mit einer Vielzahl von Einschnitten versehen sind, die in oder im Wesentlichen in Profilquerrichtung orientiert sind, wobei die Quemuten über ihre Erstreckung eine geringere Tiefe aufweisen als die Umfangsnuten.

Ein derartiger Fahrzeugluftreifen ist beispielsweise aus der WO 2004/056588 A bekannt. Dieser Reifen weist ein asymmetrisch ausgeführtes Laufstreifenprofil mit einer Vielzahl von Profilblöcken auf, welche durch Quemuten voneinander getrennt sind, die über ihre Erstreckung eine geringere Tiefe aufweisen als die ebenfalls vorgesehenen Umfangsnuten. Aus der US 2007/017618 A1 ist ein Fahrzeugluftreifen mit einem Laufstreifen bekannt, welcher zur Umfangsrichtung schräg verlaufende breite Nuten aufweist, welche Profilpositive voneinander trennen, die durch schmale, zur Umfangsrichtung unter einem Winkel zwischen 30 % und 60 % verlaufende Rillen in Profilblöcke gegliedert sind. Die schmalen Rillen weisen eine geringere Tiefe auf als die schräg verlaufenden Nuten. Die EP-A-0 788 898 offenbart einen Fahrzeugluftreifen mit einem Laufstreifen mit über die Laufstreifenbreite insgesamt V-förmig verlaufenden Hauptrillen, wobei jeweils schulterseitig eine Blockreihe verläuft, deren Blöcke durch Quemuten voneinander getrennt sind, die eine geringere Tiefe aufweisen als die V-förmig verlaufenden Hauptrillen.

Der aus der EP-B-0 671 288 bekannte Fahrzeugluftreifen weist ein asymmetrisch gestaltetes Laufstreifenprofil auf, welches, auf das Fahrzeug bezogen, einen Laufstreifeninnen- und einen Laufstreifenaußenabschnitt aufweist. Die Grenze zwischen den Profilelementen im Laufstreifeninnen- und im Laufstreifenaußenabschnitt ist gegenüber dem Reifenäquator, bei montiertem Reifen betrachtet, zu der dem Fahrzeug abgewandten Außenschulter versetzt. Dabei sind die Profilelemente im Laufstreifeninnen- und im Laufstreifenaußenabschnitt jeweils in sich über den Umfang wiederholenden, gleichartigen Profilabschnitten bzw. Pitches abgeordnet, deren Gesamtpitchanzahl im Laufstreifenaußenabschnitt kleiner ist als im Laufstreifeninnenabschnitt, wobei die Fahrfläche in den Laufstreifenhälften zumindest im Wesentlichen gleich groß ist. Durch diese Maßnahmen soll ein für den Einsatz unter winterlichen Fahrbedingungen besonders gut geeigneter Reifen zur Verfügung gestellt werden, bei dem die Vorteile einer asymmetrischen Profilgestaltung mit unterschiedlichen Gesamtpitchanzahlen im Laufstreifeninnen-und im Laufstreifenaußenabschnitt ausgenützt werden können und gleichzeitig durch den gleich hohen Fahrflächenanteil in den Laufstreifenhälften dem gesamten Profil eine ausgewogene Profilsteifigkeit verliehen werden soll, die sich auf das Fahrverhalten günstig auswirkt.

Eine Verbesserung der Fahreigenschaften des Reifens unter winterlichen Fahrbedingungen, wie beispielsweise auf Schnee oder Eis, lässt sich auf konstruktive Weise durch eine Erhöhung der Anzahl der zur Verfügung stehenden Griffkanten und daher durch eine Erhöhung der Anzahl der Einschnitte pro Profilblock erreichen. Eine Erhöhung der Dichte der Einschnitte reduziert jedoch die Steifigkeit der Blöcke, was sich auf die Fahreigenschaften des Reifens auf trockenen Fahrbahnen nachteilig auswirkt und einen stärkeren Abrieb begünstigt. Es kann daher üblicherweise die Einschnittdichte nicht auf jenes Ausmaß erhöht werden, welches erwünscht wäre.

Der Erfindung liegt somit die Aufgabe zu Grunde, bei einem Reifen der eingangs genannten Art die Einschnittdichte über das übliche Ausmaß hinaus zur Verbesserung der Winterfahreigenschaften erhöhen zu können, ohne eine Reduktion der Profilsteifigkeit und damit der Trockenfahreigenschaften in Kauf nehmen zu müssen.

Gelöst wird die gestellte Aufgabe erfindungsgemäß dadurch, dass sich mittig vom Nutgrund der Quernuten jeweils ein Einschnitt in radialer Richtung erstreckt, welcher über die gesamte Länge der Quemuten verläuft.

Bei einem erfindungsgemäß ausgeführten Laufstreifen sind daher die Quemuten nicht, wie es sonst üblich ist, mit gleicher oder annähernd gleicher Profiltiefe wie die Umfangsnuten ausgeführt, sondern sie sind "angehoben" ausgeführt. Diese Maßnahme bewirkt eine Erhöhung der Steifigkeit des Laufstreifens, sodass die Einschnittdichte in den Profilblöcken entsprechend erhöht werden kann. Die Einschnitte am jeweiligen Nutgrund der Quemuten haben den Effekt, dass sie einer etwaigen Verkürzung der Länge des Footprints (der Bodenaufstandsfläche) des Reifens - ein Effekt der in Folge der geringeren Tiefe der Quernuten eintreten könnte - entgegen wirken.

Dabei hat es sich als vorteilhaft herausgestellt, wenn die Quernuten eine Tiefe aufweisen, die zwischen 30 % und 75 % der Profiltiefe beträgt. Damit lässt sich die Profilsteifigkeit, je nach der gewählten Einschnittdichte in den Profilblöcken, erhöhen bzw. entsprechend anpassen und gleichzeitig das Wasserdrainagevermögen des Profils auf einem gutem Niveau halten.

Für das Wasserdrainagevermögen bzw. das Aquaplaningverhalten des Reifens ist es günstig, wenn die Quemuten in den schulterseitigen Laufstreifenbereichen eine größere Tiefe aufweisen als die Quemuten im mittleren Laufstreifenbereich. Optimale Verhältnisse lassen sich dann erreichen, wenn die Tiefe der Quernuten in den schulterseitigen Laufstreifenbereichen zwischen 30 % und 60 % der Profiltiefe und die Tiefe der Quemuten im mittleren Laufstreifenbereich zwischen 60 % und 75 % der Profiltiefe gewählt wird.

In erfindungsgemäß ausgeführten Laufstreifen können Profilblöcke vorgesehen sein, in welchen die Einschnitte parallel zu den diese Blöcke begrenzenden Quernuten verlaufen. Bei solchen Ausführungen ist es vorteilhaft, wenn der Abstand zwischen den die Quernuten begrenzenden Blockkanten und den diesen Kanten benachbart verlaufenden Einschnitten geringer ist als der gegenseitige Abstand sämtlicher in den Profilblöcken verlaufenden Einschnitte. Durch diese Maßnahme wird die Profilblockumfangssteifigkeit vergleichmäßigt, da die "angehobenen" Quernuten ansonsten die den Quernuten benachbarten Randbereiche der Profilblöcke versteifen würden. Die derart vergleichmäßigten Blockumfangssteifigkeiten bewirken beim Abrollen des Reifens eine gleich große Auslenkung bzw. "Verkippung" der einzelnen Blockteile im Footprint und somit eine gleichmäßige Druckverteilung Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf einen Abschnitt einer Abwicklung eines Laufstreifens mit einer Ausführungsvariante der Erfindung,
Fig. 2 einen Schnitt entlang der Linien B-B der Fig. 1,
Fig. 3 einen Schnitt entlang der Linien C-C der Fig. 1 und
Fig. 4 ein Detail der Fig. 1 in vergrößerter Darstellung.

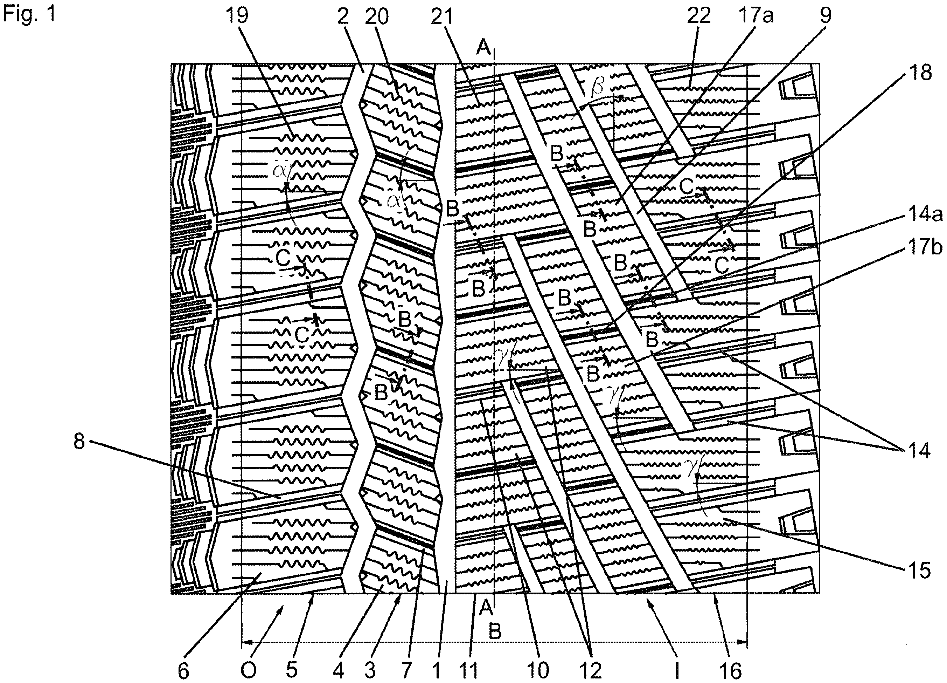

In Fig. 1 ist mit A-A der Reifenäquator und mit B die Breite des bodenberührenden Teils des Laufstreifens bezeichnet.

Der in Fig. 1 gezeigte für einen PKW-Winterreifen vorgesehene Laufstreifen ist ein asymmetrisch ausgeführter Laufstreifen, der einen definierten Außenabschnitt O und einen definierten Innenabschnitt I aufweist, sodass ein Reifen mit einem solchen Luftstreifen derart am Fahrzeug zu montieren ist, dass der Innenabschnitt I der Fahrzeuglängsachse zugewandt ist. Die Erfindung ist jedoch keineswegs auf asymmetrisch und/oder laufrichtungsgebunden ausgeführte Laufstreifen eingeschränkt, der Laufstreifen kann beliebig ausgeführt sein. Der als Beispiel dargestellte Laufstreifen weist Profilelemente in Form von Profilblöcken auf, welche durch den Verlauf und die Anordnung von Nuten und Rillen gebildet sind, wie nun im Folgenden näher erläutert wird.

Der Laufstreifen gemäß Fig. 1 weist eine in Umfangsrichtung im Wesentlichen gerade umlaufende Umfangsnut 1 auf, die gegenüber dem Reifenäquator A-A in Richtung Außenschulter versetzt ist, wobei der Versatz zwischen 5% und 20% der Laufstreifenbreite B beträgt. Die Umfangsnut 1 bildet die Grenze zwischen dem Außenabschnitt O und dem Innenabschnitt 1. Im Außenabschnitt O schließt an die Umfangsnut 1 eine in Umfangsrichtung umlaufende Blockreihe 3 an, welche durch eine weitere Umfangsnut 2, die zickzackförmig verläuft, von einer Schulterblockreihe 5 getrennt ist. Die Blockreihen 3 und 5 bestehen aus Blöcken 4 bzw. 6, die in jeder Blockreihe 3, 5 voneinander in Umfangsrichtung durch gerade ausgeführte Quernuten 7 bzw. 8 getrennt sind. An dieser Stelle sei erwähnt, dass unter Quernuten solche Nuten zu verstehen sind, die mit der exakten Querrichtung des Laufstreifens einen Winkel einschließen, der ≤ 45° ist. Die Quemuten 7 sind zu den Quernuten 8 gegensinnig geneigt und schließen mit der Querrichtung einen Winkel α ein, welcher bei der gezeigten Ausführungsvariante etwa 10° beträgt. Die Quemuten 7, 8 münden im Bereich der Zickzack-Ecken in die Umfangsnut 2 und sind in Umfangsrichtung zueinander versetzt.

Im Laufstreifeninnenabschnitt I verlaufen Schrägnuten 9 unter einem Winkel β von etwa 30° zur Umfangsrichtung und münden nahe des Reifenäquators A-A jeweils in eine Quernut 10, die zwei Blöcke 12 einer mittleren Blockreihe 11 in Umfangsrichtung voneinander trennt. Die Schrägnuten 9 münden dabei in jede zweite Quernut 10, wobei diese Quernuten 10 über die einmündende Schrägnut 9 hinaus bis zur nächsten Schrägnut 9 verlaufen und derart gemeinsam mit den Quernuten 10 und der Umfangsnut 1 die Form der Blöcke 12 bestimmen. Mit ihren zweiten Enden münden die Schrägnuten 9 nahe der Innenschulter in Quemuten 14, die zwischen den Blöcken 15 einer Schulterblockreihe 16 verlaufen. Die Schrägnuten 9 münden auch hier nur in jede zweite Quernut 14, wobei diese Quernuten 14 über die einmündende Schrägnut 9 hinaus bis zur nächsten Schrägnut 9 als Quernuten 14a fortgesetzt wird. Die Blöcke 15 in der Schulterblockreihe 16 weisen durch diese Ausgestaltung unterschiedliche Größen auf. Somit verbleiben zwischen den Schrägnuten 9 Profilbereiche, die jeweils in zwei Blöcke 17a, 17b gegliedert sind, welche voneinander durch je eine Quernut 18 getrennt sind. Sämtliche Quemuten 10, 14, 14a und 18 im Innenabschnitt I weisen bei der gezeigten Ausführungsvariante einen geraden Verlauf auf und sind zur Querrichtung des Laufstreifens auf übereinstimmende Weise geneigt, derart, dass sie mit der Querrichtung einen Winkel γ in der Größenordnung von 10° einschließen.

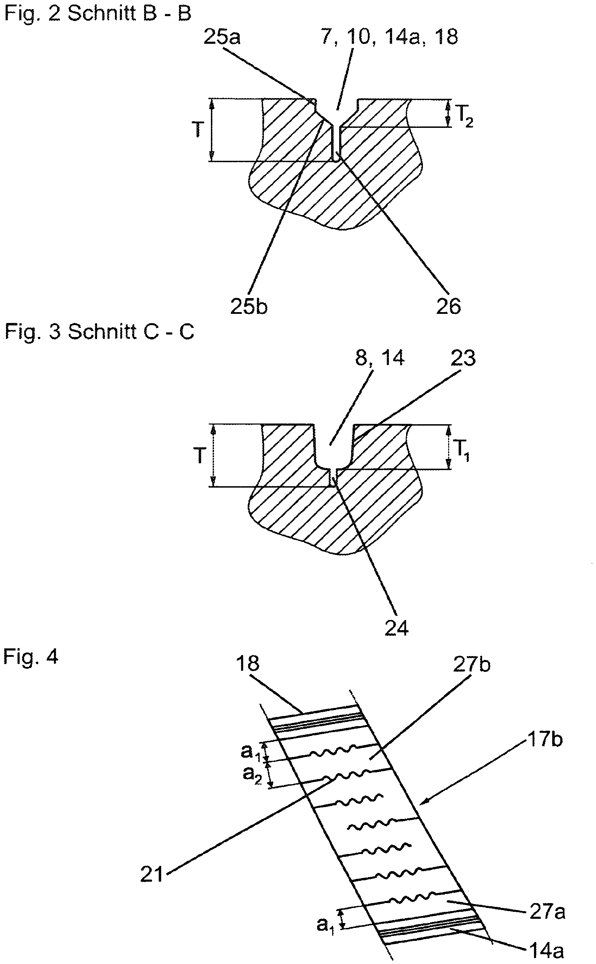

Die Umlaufsnuten 1, 2 sowie die Schrägnuten 9 weisen eine Tiefe T (Fig. 2, Fig. 3) auf, die der vorgesehenen (maximalen) Profiltiefe des Laufstreifens entspricht.

Die Blöcke 4 und 6 im Laufstreifenaußenabschnitt O sind jeweils mit einer Vielzahl von durchquerenden Einschnitten 19, 20 versehen, wobei die in den Schulterblöcken 6 verlaufenden Einschnitte 19 in Laufstreifenquerrichtung orientiert sind und zumindest in ihrem mittleren Teil in Draufsicht wellenförmig ausgeführt sind. Die in den Blöcken 4 der Blockreihe 3 vorgesehenen Einschnitte 20 sind analog ausgeführt, verlaufen aber parallel zu den Quemuten 7. Auch die Blöcke 12, 15, 17a, 17b im Laufstreifeninnenabschnitt I sind jeweils mit einer Vielzahl von Einschnitten 21, 22 versehen, welche die Blöcke 12, 15, 17a, 17b durchqueren und zumindest in ihrem mittleren Teil wellenförmig ausgeführt sind, wobei ihre Wellenform eine kleinere Amplitude und eine kleinere Wellenlänge aufweist als die Wellenform der Einschnitte 19 und 20. Die Einschnitte 22 in den Blöcken 15 der Schulterblockreihe 16 verlaufen in Profilquerrichtung, die Einschnitte 21 in den weiteren Blöcken 12, 17a und 17b jeweils parallel zu den diese Blöcke 12, 17a, 17b begrenzenden Quernuten 10, 14a und 18.

Bei der dargestellten Ausführungsform weist jeder Block 4, 6, 12, 15, 17a, 17b zumindest drei parallel zueinander verlaufende Einschnitte 19, 20, 21, 22 auf, die eine Breite von etwa 0,4 mm bis 0,6 mm aufweisen und zumindest abschnittsweise bis auf die maximale Profiltiefe T reichen. Der dargestellte Laufstreifen zeichnet sich durch eine Einschnittdichte aus, die größer ist als die übliche Einschnittdichte, wodurch sich die Winterfahreigenschaften des Reifens, insbesondere die Griffeigenschaften des Reifens auf eisigem oder schneeigem Untergrund, deutlich verbessern lassen. Durch die hohe Einschnittdichte würde jedoch der Laufstreifen "instabil" werden, d.h. seine Steifigkeit merklich verringert werden. Die Erfindung wirkt dieser potentiellen Verringerung der Profilsteifigkeit nun dadurch entgegen, dass, wie es Fig. 1 und den Schnittdarstellungen in Fig. 2 und Fig. 3 zu entnehmen ist, die Quernuten 7, 8, 10, 14, 14a und 18 speziell ausgeführt werden.

Fig. 3 zeigt einen Schnitt entlang der Linien C-C der Fig. 1 und demnach sowohl einen Schnitt durch eine der Quernuten 8 in der Schulterblockreihe 5 als auch einen Schnitt durch eine der Quemuten 14 in der Schulterblockreihe 16. Die Quernuten 8 und 14 reichen somit nicht bis auf die maximale Profiltiefe T sondern bis auf eine Tiefe T₁, die zwischen 60 % und 75% der Profiltiefe T beträgt. Bei der gezeigten Ausführung sind die Quemuten 8, 14 von Nutflanken 23 begrenzt, welche etwa in radialer Richtung bzw. unter einem von der radialen Richtung geringfügig abweichenden Winkel in der Größenordnung von bis zu 5° verlaufen. Über eine Abrundung geht jede Nutflanke 23 in den Nutgrund über. Die Quernuten 8 und 14 sind jedoch am Nutgrund nicht geschlossen, sondern es ist vom Nutgrund mittig ausgehend über die gesamte Länge der Quernuten 8 und 14 ein Einschnitt 24 vorgesehen, welcher in radialer Richtung bis auf die Profiltiefe T reicht. Der Einschnitt 23 weist eine Breite auf, die zwischen 0,5 mm und 1 mm beträgt.

Fig. 2 zeigt einen Schnitt entlang den Linien B-B der Fig. 1 und demnach einen Querschnitt durch die Quernuten 7, 10, 14a und 18, die sich im mittleren Teil des Laufstreifens erstrecken. Wie aus Fig. 2 ersichtlich ist, reichen die Quemuten 7, 10, 14a und 18 bis auf eine Tiefe T₂, die zwischen 30 und 60% der Profiltiefe T beträgt. Die Quemuten 7, 10, 14a und 18 sind von Nutflanken 25a, 25b begrenzt, wobei die Nutflanken 25a von der Luftstreifenoberfläche ausgehend im Wesentlichen in radialer Richtung verlaufen und über einen stumpfen Winkel in die zweite zur Nutgrundmitte weisende Nutflanke 25b übergehen. Auch die Quemuten 7, 10, 14a und 18 sind am Nutgrund nicht geschlossen, sondern es erstreckt sich von der Nutgrundmitte in radialer Richtung ein schmaler Einschnitt 26 bis auf die Profiltiefe T. Auch die Einschnitte 26 weisen eine Breite zwischen 0,5 mm und 1 mm auf und erstrecken sich über die gesamte Länge der Quemuten 7, 10, 14a und 18.

Bei der gezeigten bevorzugten Ausführung der Erfindung sind die Quernuten 8 und 14 in den seitlichen Bereichen des Laufstreifens in ihrer Tiefe daher geringer reduziert als die Quernuten 7, 10, 14a und 18 im mittleren Bereich des Laufstreifens. Die Tiefe der Quernuten 7, 8, 10, 14, 14a, 18 im Laufstreifen ist daher in Abhängigkeit von ihrer Lage im Laufstreifen unterschiedlich stark reduziert. Die Maßnahme, die Tiefe der Quemuten 7, 8, 10, 14, 14a, 18 geringer zu wählen als die maximale Profiltiefe, führt zu einer Erhöhung der Profilsteifigkeit und gleicht daher die potentielle Verringerung der Profilsteifigkeit durch Erhöhung der Einschnittdichte aus. Die Einschnitte 24, 26, die am jeweiligen Nutgrund der Quernuten 7, 8, 10, 14, 14a, 18 vorgesehen sind, haben den Effekt, dass sie einer etwaigen Verkürzung der Länge des Footprints des Reifens - ein Effekt der in Folge der geringeren Tiefe der Quemuten eintreten würde - entgegenwirken.

Fig. 4 zeigt eine Draufsicht auf einen der Blöcke 17b mitsamt den beiden benachbarten Quemuten 18 und 14a in vergrößerter Darstellung. Der Block 17b weist eine Vielzahl von parallel zueinander und zu den Quernuten 18 und 14a verlaufenden Einschnitten 21 auf. Die Einschnittdichte ist hoch, da der dargestellte Block 17b von sechs Einschnitten 21 durchquert ist. Die den Quemuten 18 und 14a benachbart verlaufenden Einschnitte 21 weisen einen Abstand a₁ zu den von diesen Quemuten 18 und 14a begrenzten Blockkanten auf, welcher geringer ist als der gegenseitige Abstand a₂ der innerhalb dieser äußeren Einschnitte 21 verlaufenden weiteren Einschnitte 21. Im Inneren des Profilblockes 17b teilen daher die Einschnitte 21 den Profilblock 17b in Blockelemente 27b, die flächenmäßig größer sind als die an die Quemuten 18 und 14a angrenzenden Blockelemente 27a. Diese Maßnahme hat den vorteilhaften Effekt, dass die Umfangsteifigkeit des Profilblockes 17b vergleichmäßigt wird, da die Einschnitte 21 eine größere Tiefe aufweisen als die Quemuten 14a und 18. Eine gleich große Ausführung der Blockelemente 27a und 27b hätte eine ungleichmäßige Umfangssteifigkeit des Profilblockes 27b zur Folge. Die hier anhand eines Blockes 17b verdeutlichte Maßnahme wird nun bevorzugt an all jenen Blöcken realisiert, deren Einschnitte parallel zu den von den Quemuten begrenzten Blockkanten verlaufen. Die derart vergleichmäßigten Blockumfangssteifigkeiten bewirken beim Abrollen des Reifens eine gleichgroße Auslenkung bzw. "Verkippung" der einzelnen Blockelemente 27a, 27b im Footprint und somit eine gleichmäßige Druckverteilung. Dadurch bleibt die Auflagefläche der einzelnen Profilblöcke möglichst groß und es wird eine optimale Kraftübertragung des Reifens auf glatten Oberflächen unterstützt. Die erwähnte gleichgroße Auslenkung bzw. "Verkippung" der Profilblöckelemente bewirkt darüber hinaus gleich große Schlupfverformungen und Schubbewegungen der Profilblockelemente im Footprint und damit einen gleichmäßigen und geringeren Abrieb.

Die in den Figuren gezeigte Maßnahme, die Quemuten in den seitlichen Bereichen des Laufstreifens geringer anzuheben als jene im mittleren Bereich des Laufstreifens, ist eine bevorzugte Maßnahme, wobei je nach Profilausgestaltung ein erfindungsgemäßer Laufstreifen auch derart ausgeführt werden kann, dass die Quernuten im mittleren Bereich des Laufstreifens eine größere Tiefe aufweisen als jene in den Rand- bzw. Schulterbereichen oder dass die Tiefen der Quernuten übereinstimmen. Bei einem erfindungsgemäß ausgeführten Reifen sind jedenfalls Quernuten, die Blöcke mit einer hohen Einschnittdichte begrenzen, mit einer geringeren Tiefe ausgeführt als die maximale Profiltiefe. Diese Quemuten werden mit einer Tiefe versehen, die zwischen 30 % und 75% der maximalen Profiltiefe beträgt. Bei einem Reifen mit einer Profiltiefe von 8 mm beträgt beispielsweise die Tiefe der Quernuten in den Schulterblockreihen 6,5 mm und die Tiefe der Quernuten im mittleren Bereich des Laufstreifens 3 mm.

Die Erfindung ist auf die dargestellten und beschriebenen Ausführungsvarianten nicht eingeschränkt. So ist es insbesondere möglich, im Laufstreifen Profilblöcke bzw. Profilblockreihen mit in Umfangsrichtung umlaufenden Laufstreifenbändern zu kombinieren.

### Bezugszeichenliste

A-A .... Reifenäquator
B ........ Breite
I ......... Innenseite
O ........ Außenseite
1......... Umfangsnut
2......... Umfangsnut
3......... Blockreihe
4......... Blöcke
5......... Schulterblockreihe
6......... Blöcke
7......... Quernut
8......... Quernut
9......... Schrägnuten
10....... Quernut
11....... mittlere Blockreihe
12 ....... Blöcke
14....... Quernut
14a ..... Quernut
15 ....... Blöcke
16....... Schulterblockreihe
17a ..... Blöcke
17b ..... Blöcke
α......... Winkel
β......... Winkel
18 ....... Quernut
19....... Einschnitte
20....... Einschnitte
21....... Einschnitt
22 ....... Einschnitt
23 ....... Nutflanke
24....... Einschnitt
25a ..... Nutflanke
25b ..... Nutflanke
26 ....... Einschnitt
27a ..... Blockelement
27b ..... Blockelement
T ........ Profiltiefe
T₁ ....... Tiefe
T₂ ....... Tiefe

## Patentansprüche

1. Fahrzeugluftreifen, insbesondere für den Einsatz unter winterlichen Fahrbedingungen, mit einem Laufstreifen mit einer Profilierung mit auf maximale Profiltiefe ausgeführten Umfangsnuten (1, 2), Schrägnuten (9) und dergleichen sowie mit Quemuten (7, 8, 10, 14, 14a, 18), welche Profilblöcke (4, 6, 12, 15, 17a, 17b) begrenzen, welche jeweils mit einer Vielzahl von Einschnitten (19, 20, 21, 22) versehen sind, die im Wesentlichen in Profilquerrichtung orientiert sind, wobei die Quernuten (7, 8, 10, 14, 14a, 18) über ihre Erstreckung eine geringere Tiefe aufweisen als die Umfangsnuten (1, 2),
**dadurch gekennzeichnet,**
**dass** sich mittig vom Nutgrund der Quernuten (7, 8, 10, 14, 14a, 18) jeweils ein Einschnitt (24, 26) in radialer Richtung erstreckt, welcher über die gesamte Länge der Quemuten (7, 8, 10, 14, 14a, 18) verläuft.

2. Fahrzeugluftreifen nach Anspruch 1, **dadurch gekennzeichnet, dass** die Quemuten (7, 8, 10, 14, 14a, 18) eine Tiefe (T₁, T₂) aufweisen, die zwischen 30% und 75% der Profiltiefe (T) beträgt.

3. Fahrzeugluftreifen nach Anspruch 1 oder 2, **dadurch gekennzeichnet, dass** die Quemuten (8, 14) in den schulterseitigen Laufstreifenbereichen eine größere Tiefe (T₁) aufweisen als die Quemuten (7, 8, 10, 18) im mittleren Laufstreifenbereich.

4. Fahrzeugluftreifen nach einem der Ansprüche 1 bis 3, **dadurch gekennzeichnet, dass** die Tiefe (T₁) der Quernuten (8, 14) in den schulterseitigen Laufstreifenbereichen zwischen 60% und 75% der Profiltiefe (T) beträgt.

5. Fahrzeugluftreifen nach einer der Ansprüche 1 bis 3, **dadurch gekennzeichnet, dass** die Tiefe (T₂) der Quemuten (7, 10, 14a, 18) im mittleren Laufstreifenbereich zwischen 30% und 60% der Profiltiefe (T) beträgt.

6. Fahrzeugluftreifen nach Anspruch 1, **dadurch gekennzeichnet, dass** der Einschnitt (24, 26) eine Breite von 0,5 mm bis 1 mm aufweist.

7. Fahrzeugluftreifen mit Profilblöcken (4, 12, 17a, 17b), in welchen zumindest drei Einschnitte (20, 21) parallel zu den diese Blöcke (4, 12, 17a, 17b) begrenzenden Quernuten (7, 10, 14a, 18) verlaufen, nach einem oder mehreren der Ansprüche 1 bis 6,
**dadurch gekennzeichnet,**
**dass** der Abstand (a₁) zwischen den die Quemuten (7, 10, 14a, 18) begrenzenden Blockkanten und den diesen Kanten benachbart verlaufenden Einschnitten (20, 21) geringer ist als der gegenseitige Anstand (a₂) sämtlicher weiterer in den Profilblöcken (4, 12, 17a, 17b) verlaufenden Einschnitte (20, 21).

## Claims

1. Vehicle type, in particular for use in winter driving conditions, comprising a tread rubber with a profiling with circumferential grooves (1, 2) made to the maximum profile depth, oblique grooves (9) and the like and also with transverse grooves (7, 8, 10, 14, 14a, 18), which delimit profile blocks (4, 6, 12, 15, 17a, 17b), which are respectively provided with a multiplicity of sipes (19, 20, 21, 22), which are oriented substantially in the transverse direction of the profile, the transverse grooves (7, 8, 10, 14, 14a, 18) having a smaller depth over their extent than the circumferential grooves (1, 2), **characterized in that** from the middle of the groove base of the transverse grooves (7, 8, 10, 14, 14a, 18) there respectively extends in the radial direction a sipe (24, 26), which runs over the entire length of the transverse grooves (7, 8, 10, 14, 14a, 18).

2. Pneumatic vehicle tyre according to Claim 1, **characterized in that** the transverse grooves (7, 8, 10, 14, 14a, 18) have a depth (T₁, T₂) which is between 30% and 75% of the profile depth (T).

3. Pneumatic vehicle tyre according to Claim 1 or 2, **characterized in that** the transverse grooves (8, 14) in the regions of the tread rubber at the shoulders have a greater depth (T₁) than the transverse grooves (7, 8, 10, 18) in the central region of the tread rubber.

4. Pneumatic vehicle tyre according to one of Claims 1 3, **characterized in that** the depth (T₁) of the transverse grooves (8, 14) in the regions of the tread rubber at the shoulders is between 60% and 75% of the profile depth (T).

5. Pneumatic vehicle tyre according to one of Claims 1 3, **characterized in that** the depth (T₂) of the transverse grooves (7, 10, 14a, 18) in the central region of the tread rubber is between 30% and 60% of the profile depth (T).

6. Pneumatic vehicle tyre according to Claim 1, **characterized in that** the sipe (24, 26) has a width of 0.5 mm to 1 mm.

7. Pneumatic vehicle tyre comprising profile blocks (4, 12, 17a, 17b), in which at least three sipes (20, 21) run parallel to the transverse grooves (7, 10, 14a, 18) delimiting these blocks (4, 12, 17a, 17b), according to one or more of Claims 1 to 6, **characterized in that** the distance (a₁) between the block edges delimiting the transverse grooves (7, 10, 14a, 18) and the sipes (20, 21) running alongside these edges is less than the distance (a₂) from one another of all the other sipes (20, 21) running in the profile blocks (4, 12, 17a, 17b).

## Revendications

1. Bandage pneumatique pour roue de véhicule, en particulier destiné à être utilisé dans des conditions de roulage hivernal et comportant une bande de roulement dotée d'un profil qui présente des rainures périphériques (1, 2) réalisées à la profondeur maximale du profil, des rainures obliques (9) et similaires ainsi que des rainures transversales (7, 8, 10, 14, 14a, 18) qui délimitent des blocs profilés (4, 6, 12, 15, 17a, 17b) tous dotés de plusieurs entailles (19, 20, 21, 22) orientées essentiellement dans la direction transversale du profil, les rainures transversales (7, 8, 10, 14, 14a, 18) présentant sur leur extension une profondeur moindre que les rainures périphériques (1, 2),
**caractérisé en ce que**
une entaille (24, 26) qui s'étend sur toute la longueur des rainures transversales (7, 8, 10, 14, 14a, 18) s'étend dans la direction radiale à partir du milieu du fond de chacune des rainures transversales (7, 8, 10, 14, 14a, 18).

2. Bandage pneumatique pour roue de véhicule selon la revendication 1, **caractérisé en ce que** les rainures transversales (7, 8, 10, 14, 14a, 18) ont une profondeur (T₁, T₂) comprise entre 30 % et 75 % de la profondeur (T) du profil.

3. Bandage pneumatique pour roue de véhicule selon les revendications 1 ou 2, **caractérisé en ce que** dans les parties de la bande de roulement situées du côté des épaulements, les rainures transversales (8, 14) présentent une plus grande profondeur (T₁) que les rainures transversales (7, 8, 10, 18) situées dans la partie centrale de la bande de roulement.

4. Bandage pneumatique pour roue de véhicule selon l'une des revendications 1 à 3, **caractérisé en ce que** dans les parties de la bande de roulement situées du côté des épaulements, la profondeur (T₁) des rainures transversales (8, 14) représente entre 60 % et 75 % de la profondeur (T) du profil.

5. Bandage pneumatique pour roue de véhicule selon l'une des revendications 1 à 3, **caractérisé en ce que** la profondeur (T₂) des rainures transversales (7, 10, 14a, 18) situées dans la partie centrale de la bande de roulement représente entre 30 % et 60 % de la profondeur (T) du profil.

6. Bandage pneumatique pour roue de véhicule selon la revendication 1, **caractérisé en ce que** la largeur de l'entaille (24, 26) est comprise entre 0,5 mm et 1 mm.

7. Bandage pneumatique pour roue de véhicule selon l'une ou plusieurs des revendications 1 à 6, doté de blocs profilés (4, 12, 17a, 17b) dans lesquels au moins trois entailles (20, 21) s'étendent parallèlement aux rainures transversales (7, 10, 14a, 18) qui délimitent ces blocs (4, 12, 17a, 17b),
**caractérisé en ce que**
la distance (a₁) entre les bords des blocs qui délimitent les rainures transversales (7, 10, 14a, 18) et les entailles (20, 21) qui s'étendent au voisinage de ces bords est plus petite que la distance mutuelle (a₂) entre toutes les autres entailles (20, 21) qui s'étendent dans les blocs profilés (4, 12, 17a, 17b).
